# FASCICULE DE BREVET EUROPEEN

(11) **EP 3 734 712 B1**
(45) Date de publication et mention de la délivrance du brevet: **19.10.2022**
(21) Numéro de dépôt: 20171911.9
(22) Date de dépôt: 28.04.2020
(51) Int. Cl.: H01M 4/04, C23C 14/02, C23C 14/04, H01M 10/28, H01M 10/04

(54) **DISPOSITIF DE STOCKAGE ET PROCÉDÉ DE FABRICATION**
SPEICHERVORRICHTUNG UND IHR HERSTELLUNGSVERFAHREN
STORAGE DEVICE AND METHOD FOR MANUFACTURING SAME

(30) Priorité: 02.05.2019 FR 1904614
(43) Date de publication de la demande: 04.11.2020
(73) Titulaire: Commissariat à l'Energie Atomique et aux Energies Alternatives, 75015 Paris (FR)
(72) Inventeur: BAZIN, Arnaud, 38054 GRENOBLE CEDEX 09 (FR); PONCET, Séverine, 38054 GRENOBLE CEDEX 09 (FR); OUKASSI, Sami, 38054 GRENOBLE CEDEX 09 (FR); SECOUARD, Christophe, 38054 GRENOBLE CEDEX 09 (FR)
(74) Mandataire: Hautier IP

(56) Documents cités:
- EP-A1- 2 833 461
- EP-A1- 3 012 886
- FR-A1- 2 943 181
- US-B2- 9 899 661

## Description

### DOMAINE TECHNIQUE

La présente invention concerne les dispositifs microélectroniques disposant d'électrodes, dans le domaine du stockage d'énergie par voie électrochimique, en particulier sous forme de micro-batterie (réalisant ainsi un composant de microstockage électrochimique). L'invention trouve pour application la fabrication de dispositifs microélectroniques offrant un tel stockage. Par dispositif microélectronique, on entend tout type de dispositif réalisé avec les moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...).Cela inclut des applications du type composants de microstockage par voie électrochimique (microbatteries, microsupercapacités, composant ioniques solides de tout type).

Un intérêt spécifique de l'invention est donc la réalisation de dispositifs de stockage d'énergie électrochimique. Cela inclut notamment les dispositifs du type batteries, et en particulier celles à l'échelle de la micro-électronique, dites micro-batteries, accumulateurs ou condensateurs utilisant un électrolyte, de préférence solide.

### ÉTAT DE LA TECHNIQUE

Les systèmes de stockage d'énergie électrochimique sont de manière générale réalisés par des dépôts successifs sur un substrat d'un premier collecteur de courant, d'une première électrode, d'un électrolyte ou conducteur ionique, d'une deuxième électrode, et d'un deuxième collecteur de courant. Une encapsulation, par le biais de dépôt de couches supplémentaires, ou par report de capot, est souvent nécessaire pour protéger le système de la réactivité chimique avec l'oxygène et la vapeur d'eau.

La miniaturisation des dispositifs implique de pouvoir produire des sources d'énergie de petite taille, notamment de quelques millimètres carrés, capables de stocker une quantité d'énergie suffisante pour l'application. La capacité d'une micro-batterie est directement proportionnelle au volume des deux électrodes, et notamment de l'électrode positive. La surface active de cette dernière est fortement limitée par la taille finale de la micro-batterie afin qu'elle puisse être intégrée au dispositif final sans encombrement trop pénalisant. Ainsi, une voie utilisable pour accroître la capacité d'une batterie tout en minimisant sa taille est d'augmenter l'épaisseur de l'électrode, et en particulier de l'électrode positive. On cherche typiquement à dépasser une épaisseur de 10 µm.

Cependant, augmenter cette épaisseur entraîne des défauts de surface liés au procédé de dépôt, pouvant entraîner la mise en court-circuit du dispositif de stockage d'énergie. Notamment, les matériaux d'électrodes comme le LiCoO₂ sont habituellement déposés par des procédés de pulvérisation cathodique qui sont contraints à des faibles épaisseurs, généralement inférieures à la dizaine de microns. D'autre part, un accroissement d'épaisseur d'électrodes induit des défauts de volume, tels des fissures ou des délaminations. La structure d'une couche épaisse d'électrodes est elle-même peu maîtrisée (taille de grain, orientation cristalline) si bien que la performance électrochimique est réduite.

Une tentative de solution au problème précédemment évoqué est proposée dans la publication US 9899661 B2 qui présente la formation d'une électrode par des dépôts successifs. En particulier, sont alternés des dépôts de LiCoO₂ sous argon et des dépôts de LiCoO₂ sous un mélange argon/oxygène. L'ensemble multicouche en résultant induit une rupture de nucléation de croissance puis une renucléation. Une diminution de la température de recuit du matériau, nécessaire afin d'obtenir la bonne phase cristalline d'un point de vue électrochimique, est aussi appliquée. Cette publication affirme qu'il est possible d'obtenir des épaisseurs de films de LiCoO₂ de plus de 10 µm par ce procédé. Cependant, ce dépôt multicouche induit une hétérogénéité d'électrodes aussi bien en compositions qu'en structure cristalline et donc une hétérogénéité des performances entre les différentes couches.

Un objet est donc de proposer un procédé de fabrication d'électrode offrant, relativement à une électrode connue, et à épaisseur équivalente, une qualité de fabrication (notamment par réduction de défauts) et des propriétés électriques améliorées. Cela peut par exemple autoriser des épaisseurs importantes sans que cela soit très préjudiciable, voire pas préjudiciable, aux performances de l'électrode, voire avantageux, surtout d'un point de vue électrique.

Les autres objets, caractéristiques et avantages apparaîtront à l'examen de la description suivante et des dessins d'accompagnement. Il est entendu que d'autres avantages peuvent être incorporés.

### RÉSUMÉ

Pour atteindre cet objectif, un mode de réalisation prévoit un procédé de réalisation d'une électrode, notamment pour un dispositif de stockage d'énergie par voie électrochimique sous forme d'une micro-batterie, dans lequel l'électrode est obtenue par formation de plusieurs couches.

Avantageusement, ce procédé comprend :
une réalisation d'une première couche d'électrode par dépôt physique en phase vapeur ;
ii. une formation d'une couche de masquage sur la première couche d'électrode, configurée pour recouvrir une première portion de la surface exposée de la première couche d'électrode sans recouvrir une deuxième portion, non masquée, de la surface exposée de la première couche d'électrode, la deuxième portion comportant des reliefs ayant une extension, suivant une dimension en épaisseur de l'électrode, supérieure à une extension maximale, suivant la dimension en épaisseur de l'électrode, de la première portion ;
iii. un enlèvement de matière de la première couche d'électrode par application d'une solution de gravure sur la première couche d'électrode à partir de la deuxième portion ;
iv. une suppression de la couche de masquage ;
v. une réalisation d'une deuxième couche d'électrode immédiatement au-dessus de la surface exposée de la première couche d'électrode.

Grâce à l'invention, on peut employer la technique du dépôt physique en phase vapeur pour réaliser tout ou partie des couches de l'électrode à réaliser alors que cette technique induit généralement des défauts très pénalisants, limitant l'épaisseur de l'électrode réalisable. Le procédé de l'invention permet de préférence d'obtenir des épaisseurs élevées, donc favorables à un bon stockage d'énergie, avec une bonne qualité de couches et un procédé de fabrication en lui-même bien maîtrisé qui est le dépôt physique en phase vapeur.

Avantageusement, on utilise du LiCoO₂ pour au moins une des couches de l'électrode fabriquée.

Est visé également un procédé de fabrication d'un dispositif de stockage d'énergie par voie électrochimique comprenant la réalisation d'au moins une première électrode par le biais du procédé indiqué ci-dessus. Avantageusement, on forme un premier collecteur sur un support puis on réalise la première électrode sur le premier collecteur. De préférence, le procédé comprend la formation d'autres éléments, en empilement sur les précédents ; il peut en particulier s'agir d'un électrolyte, de préférence sous forme solide, puis d'une deuxième électrode et d'un deuxième collecteur.

Un autre aspect concerne un dispositif de stockage d'énergie par voie électrochimique obtenu par le procédé de l'invention.

Un autre aspect concerne une électrode pour un dispositif de stockage d'énergie par voie électrochimique sous forme de micro-batterie, comprenant une pluralité de couches empilées, caractérisée en ce qu'une première couche d'électrode de la pluralité de couches empilées comprend au moins une cavité formée en creux dans son épaisseur et en ce qu'une deuxième couche d'électrode de la pluralité de couches empilées, située immédiatement au-dessus de la première couche d'électrode, recouvre au moins en partie la surface exposée de la première couche d'électrode et remplit l'au moins une cavité.

Éventuellement, l'au moins une cavité comprend une cavité s'étendant suivant l'intégralité de l'épaisseur de la première couche. Ainsi, le remplissage par le matériau de la deuxième couche peut dans ce cas atteindre et venir au contact du matériau de la couche sous-jacente à la première couche, qui peut-être la surface d'un support ou la surface de toute autre couche située immédiatement en dessous de la couche comprenant la cavité.

Un autre aspect est relatif à un dispositif de stockage d'énergie par voie électrochimique sous forme d'une micro-batterie, comprenant en empilement sur un support, un premier collecteur, une première électrode, un électrolyte, une deuxième électrode et un deuxième collecteur, au moins l'une parmi la première électrode et la deuxième électrode.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement un empilement de couches destinées à former une micro-batterie.
La figure 2 représente un exemple d'étape de réalisation d'une première couche d'électrode de micro-batterie.
La figure 3 représente un exemple d'étape de réalisation d'une électrode de micro-batterie suivant celle de la figure 2.
La figure 4 montre une étape suivante de celle de la figure 3.
La figure 5 schématise la formation deuxième couche d'électrode.
La figure 6 procure un exemple d'intégration d'une électrode positive multicouches dans une micro-batterie.
La figure 7 est une courbe révélant le résultat avantageux de l'invention en termes de capacité obtenue.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
- On procède à un recuit de la première couche après suppression de la couche de masquage et avant réalisation de la deuxième couche d'électrode ;
- On procède à un recuit de la deuxième couche après sa réalisation, ou si au moins une troisième couche est ensuite formée, avantageusement après suppression de la couche de masquage sur ladite deuxième couche.
- la deuxième couche d'électrode 122 est réalisée par dépôt physique en phase vapeur;
- l'enlèvement de matière est réalisé par application d'une solution de gravure sur la première couche d'électrode 121 à partir de la deuxième portion ;
- on utilise du LiCoO₂ pour réaliser au moins l'une parmi la première couche d'électrode 121 et la deuxième couche d'électrode 122 ;
- une réalisation d'au moins une troisième couche d'électrode au-dessus de la deuxième couche d'électrode 122 en réitérant les étapes ii) à v) est comprise ;
- on peut procéder à un recuit de chaque couche d'électrode avant la réalisation de toute autre couche au-dessus ;
- l'épaisseur d'une dernière couche d'électrode de l'électrode 12, la plus éloignée de la première couche d'électrode 121, est inférieure à celles des autres couches d'électrode ;
- la formation d'une couche de masquage 16 comprend la formation d'au moins un motif 1212 traversant toute l'épaisseur de la couche de masquage 16 de sorte à exposer une troisième portion de la première couche d'électrode 121, l'enlèvement étant configuré pour produire un enlèvement de matière additionnelle à partir de la troisième portion ;
- les couches d'électrode ont une épaisseur supérieure ou égale à 1 µm et/ou inférieure ou égale à 10 µm ;
- au moins deux couches immédiatement successives parmi les couches d'électrode présentent une même épaisseur ;
- la formation de la couche de masquage 16 peut être faite avec une étape de dépôt de résine, de préférence par enduction centrifuge.

Il est précisé que, dans le cadre de la présente invention, le terme « sur » ou « au-dessus » ne signifie pas obligatoirement « au contact de ». Ainsi, par exemple, le dépôt d'une couche sur une autre couche, ne signifie pas obligatoirement que les deux couches sont directement au contact l'une de l'autre mais cela signifie que l'une des couches recouvre au moins partiellement l'autre en étant, soit directement à son contact, soit en étant séparée d'elle par un film, ou encore une autre couche ou un autre élément. Une couche peut par ailleurs être composée de plusieurs sous-couches d'un même matériau ou de matériaux différents ; c'est particulièrement le cas pour la couche d'électrode décrite plus loin.

Il est précisé que dans le cadre de la présente invention, l'épaisseur d'une couche ou du substrat se mesure selon une direction perpendiculaire à la surface selon laquelle cette couche ou ce substrat présente son extension maximale. Si une couche n'est pas totalement plane, notamment parce qu'elle présente des défauts qui sont susceptibles d'être en relief sur la face exposée de ladite couche, l'épaisseur s'entend de la dimension de cette couche en dehors de ses défauts.

Certaines parties du dispositif de l'invention peuvent avoir une fonction électrique. Certaines sont employées pour des propriétés de conduction électrique et on entend par électrode, collecteur ou équivalent, des éléments formés d'au moins un matériau ayant une conductivité électrique suffisante, dans l'application, pour réaliser la fonction souhaitée. À l'inverse, on entend par isolant électrique ou diélectrique un matériau qui, dans l'application, assure une fonction d'isolation électrique.

On entend par dispositif de stockage d'énergie par voie électrochimique, un dispositif fonctionnant avec une couche d'électrolyte, de préférence sous forme solide et permettant, en conjonction avec une partie fonctionnelle électriquement conductrice inférieure et une partie fonctionnelle électriquement conductrice supérieure, encadrant la couche d'électrolyte, le stockage d'énergie sous forme d'augmentation de différence de potentiel ou le déstockage d'énergie sous forme de réduction de différence de potentiel. Dans le domaine de la micro-électronique, il peut s'agir de micro-batteries, qui s'entendent de tels dispositifs avec des dimensions à l'échelle de la micro-électronique, notamment avec une épaisseur globale de quelques dizaines de microns, par exemple moins de 100 microns.

D'une façon générale, un dispositif de stockage d'énergie par voie électrochimique comprend deux électrodes séparées par un électrolyte. Durant la décharge, l'anode (électrode négative) est le siège d'une oxydation, des ions traversent l'électrolyte et vont à la cathode (électrode positive) subir une réduction en venant s'intercaler dans un matériau spécifique (matériau hôte) ; les électrons ainsi produits alimentent en énergie le circuit extérieur. Durant la charge, les ions font le trajet inverse, les électrons étant fournis par le circuit extérieur.

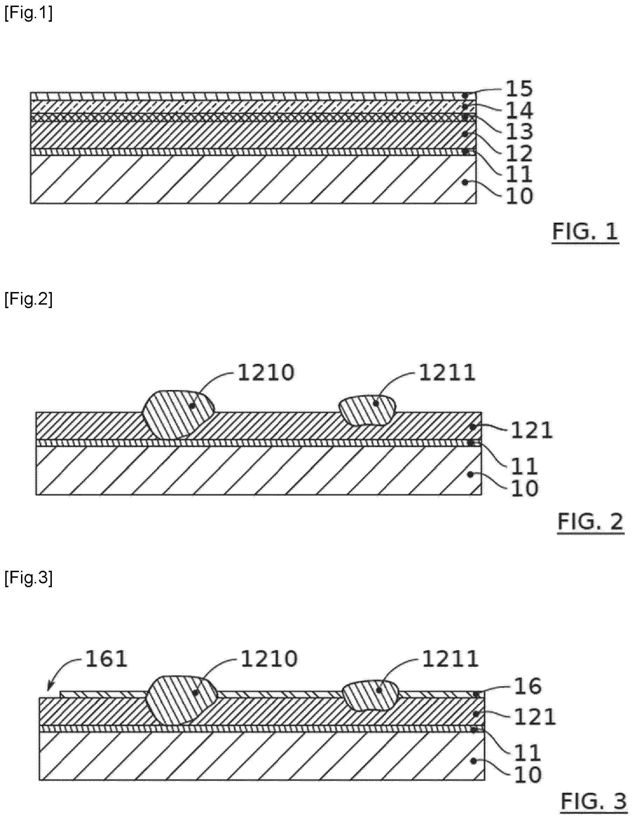

La figure 1 donne une représentation purement schématique d'un empilement de diverses couches permettant de former une micro-batterie. Dans ce contexte, un support 10 peut recevoir le reste de l'empilement et est par exemple formé avec une plaque d'un matériau semi-conducteur tel du silicium ou de tout autre matériau organique ou inorganique, par exemple du verre. Si le support 10 est électriquement conducteur, il peut comprendre au moins une couche électriquement isolante superficielle. Cette disposition n'est pas représentée sur le schéma de la figure 1. Le repère 11 correspond à un premier collecteur de courant. Au sens de la présente demande, le terme collecteur s'entend d'une partie du dispositif ayant pour fonction de raccorder une électrode à un élément extérieur au dispositif, c'est-à-dire situé à l'extérieur de l'empilement de couches du dispositif, généralement encapsulées. On peut utiliser des métaux aux bonnes propriétés de conduction d'électricité pour cette partie. C'est le cas du platine ; des matériaux moins onéreux, comme le titane, sont aussi possibles.

L'électrode en question dans l'exemple est ici une première électrode 12 disposée au-dessus et au contact du premier collecteur qui sert alors de support à la formation de l'électrode 12. Le terme électrode s'entend quant à lui d'une partie du dispositif en continuité électrique avec une couche active (en particulier un électrolyte, de préférence solide, pour le cas du stockage électrochimique). La première électrode 12 (ou électrode positive utilisée dans un accumulateur au lithium ou sodium conventionnel) peut employer divers matériaux, comme : LiCoO₂, V₂O₅, TiS₂, LiMn₂O₄, NaMnO₂, NaCoO₂. Elle peut comprendre un matériau de composition ABX, A étant un métal alcalin et de préférence Li, B étant un métal de transition et de préférence Co, X étant de l'oxygène (O) ou du phosphate (PO₄). D'une manière générale, des matériaux à base de lithium-Cobalt et/ou de lithium-manganèse sont utilisables dans l'invention. Comme indiqué précédemment, on cherche généralement à ce que la première électrode (ici la cathode) soit assez épaisse, pour autoriser un stockage d'une quantité d'énergie suffisante sur une surface limitée. On peut ici mettre en œuvre des épaisseurs supérieures ou égales à 10µm et de préférence supérieures ou égales à 20µm.

À l'opposé de son contact avec le premier collecteur 11, la première électrode 12 est au contact d'un électrolyte 13. Les verres conducteurs ioniques et les chalcogénures d'alcalins sont parmi les électrolytes solides inorganiques applicables à une batterie tout-solide. Le matériau correspondant peut être choisi parmi des sulfures et des systèmes vitreux d'électrolyte d'oxysulfure, ainsi qu'une série de verre-céramique super-ionique de sulfure Li₂S-P₂S₅, dont la conductivité d'ion de Li⁺ est comparable à celle des électrolytes liquides. En ce qui concerne l'électrolyte pour les batteries au sodium, il existe la même famille de verre, par exemple Na₃PS₄.

La figure 1 montre ensuite une deuxième électrode, ici formant l'anode, sur l'autre face de l'électrolyte 13. Par exemple, il peut s'agir de silicium. Un deuxième collecteur 15 la surmonte. Comme précédemment, du titane peut être employé ou un autre métal aux propriétés conductrices.

D'une manière générale, dans un contexte habituel d'une première électrode 12, en référence à la figure 1, on atteint difficilement une épaisseur de 10 µm sans un impact rédhibitoire sur la qualité de cette électrode, notamment au niveau du rendement électrique après fabrication. En effet l'augmentation de l'épaisseur d'électrode engendre une forte défectivité morphologique se traduisant souvent par une rugosité et une tortuosité prononcée à la surface de la dite électrode, et parfois par une délamination entre l'électrode et la couche de collecteur de courant du niveau précédent ; il en résulte une dégradation de la réponse électrique du composant, souvent sous forme de court-circuit et/ou d'importants courants de fuite.

Le procédé de l'invention offre une solution à ce problème et présente, en référence à la figure 2, une étape durant laquelle on forme une première couche d'électrode 121 au-dessus du collecteur 11. Préférentiellement, on utilise un dépôt physique en phase vapeur, communément connu sous l'acronyme PVD (de l'anglais Physical Vapor Déposition). Les conditions de ce dépôt peuvent être classiques. Elles occasionnent des défauts comme le révèlent les portions 1210 et 1211. Il peut s'agir de défauts de croissance se présentant sous la forme d'incrustation avec une structure cristalline mal maîtrisée. Certains défauts sont tels qu'ils peuvent s'étendre sur l'intégralité de l'épaisseur de la couche 121, comme le représente le défaut 1210. D'autres défauts sont plus surfaciques, comme celui portant le repère 1211. Ces défauts forment des reliefs au-delà d'une surface moyenne de la couche 121, sensiblement orientée perpendiculairement à une dimension en épaisseur des différentes couches. Notamment, des reliefs allant au-delà de 1 µm, voire de 2 µm, voire encore de 3 µm sont possibles. Cela peut représenter par exemple aussi plus de 30%, voire être de l'ordre de grandeur de l'épaisseur de la couche déposée lors d'une seule étape de dépôt; par exemple de 2 à 3 microns pour une couche de 3 microns et de 10 à 15 microns pour une couche de 20 microns.

À la figure 3, une couche de masquage 16 a été formée au-dessus de la première couche 121. Cette formation est configurée pour recouvrir des portions de la couche 121 non affectées par les défauts en relief 1210, 1211. Ainsi, une portion des défauts est ici exposée malgré la présence de la couche de masquage 16. On comprend que l'épaisseur de la couche de masquage 16 est configurée pour être suffisamment fine de sorte à ne pas recouvrir totalement les reliefs des défauts. Typiquement, l'épaisseur de la couche de masquage 16 peut-être au moins égale à 1 µm, et/ou de préférence inférieure à 4 µm, et plus préférentiellement au moins égale à 1,5 µm et/ou inférieure à 2,5 µm. Par exemple, la couche de masquage 16 peut mesurer, en épaisseur, 2 µm avec une marge de +/-0,2 µm.

La technique de l'enduction centrifuge (en anglais « spin coating ») convient parfaitement pour réaliser la couche de masquage 16. De manière habituelle, on commence par appliquer de la résine sur la face exposée de la couche 121 et on produit une rotation du support. La force centrifuge ainsi générée répartit la résine sur la surface. Les conditions de la rotation, en particulier le temps et la vitesse, permettent d'obtenir une couche de l'épaisseur souhaitée. On peut ensuite durcir la résine, par évaporation de son solvant. Le résultat illustré à la figure 3 montre une première portion de la première couche d'électrode 121 qui est revêtue alors qu'une deuxième portion de la couche d'électrode 121 reste exposée, sans être protégée par la couche de masquage 16. Suivant un exemple, l'épaisseur de la couche de masquage 16 représente au moins 20% de l'épaisseur de la première couche d'électrode 121 ; en alternative ou en complément, l'épaisseur de la couche de masquage 16 peut représenter au maximum 70% de l'épaisseur de la première couche électrode 121et de préférence au maximum 30% de cette épaisseur. D'une manière générale, la formation de la couche de masquage est configurée pour qu'elle remplisse des espaces autour d'au moins certains reliefs 1210, 1211, en comblant une partie seulement de la hauteur séparant les creux (ou la surface moyenne de la couche considérée) et le sommet des reliefs les plus élevés. De la sorte, avantageusement, la deuxième portion comprend au moins une zone se présentant sous la forme d'un ilot de matière de la première couche d'électrode 121 circonscrit par la couche de masquage, ilot de matière dû au caractère saillant des reliefs de défaut. Ainsi la surface de cet ilot forme sur surface exposée de la première couche 121. La surface de cet ilot a une altitude plus élevée que la couche de masquage. Elle forme un sommet non recouvert lors du masquage.

On notera que d'autres parties de la première couche d'électrode 121 sont éventuellement aussi exposées. Cela peut se faire par création de motifs dans le matériau de la couche de masquage 16, par une phase de photolithographie permettant de définir des zones 161 non protégées de la couche 121. En particulier, on verra à l'étape suivante qu'il est ainsi possible de délimiter latéralement la première électrode, dans sa couche 121.

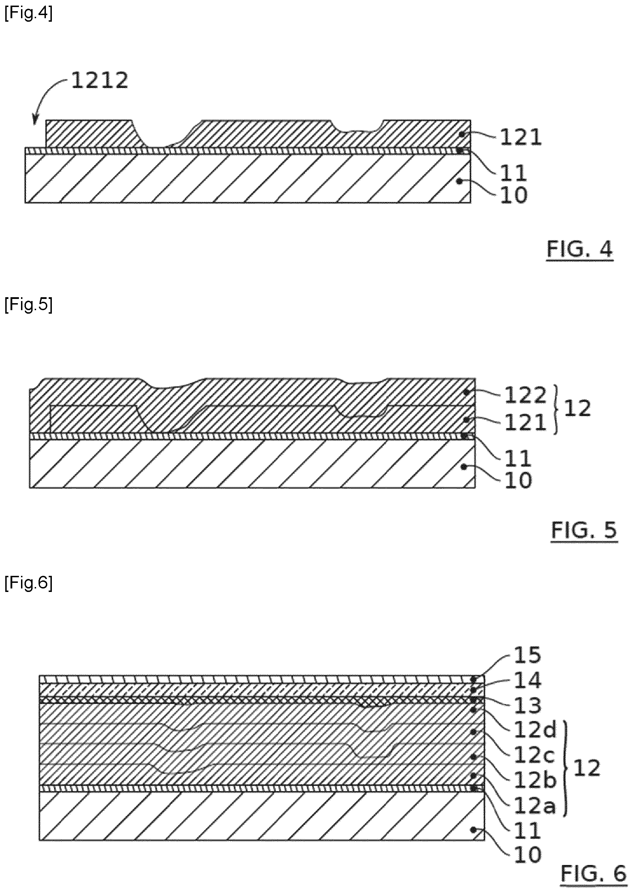

En effet, la phase suivante, illustrée à la figure 4, est une phase d'enlèvement de matière de la première couche d'électrode 121. Les parties non protégées par la couche de masquage 16 peuvent être le lieu d'une attaque par application d'une solution de gravure. Il peut s'agir d'une gravure humide. La gravure s'effectue par exemple dans un bain de H₂SO₄, la vitesse de gravure étant notamment de l'ordre de 6 µm/min. Une gravure de l'ordre d'une minute est convenable pour une couche 121 initiale d'épaisseur de 10 µm en dehors des défauts. Dans certains cas, il n'est pas souhaitable que l'enlèvement soit configuré pour atteindre le fond de la couche 121 pour supprimer totalement un motif. En effet, certains d'entre eux ont la forme d'incrustations, avec une interface fragile avec le reste de la couche 121, si bien qu'ils ont une propension à être enlevés sous forme de blocs. Dans ce cas, une gravure même non prolongée peut atteindre l'interface des défauts et détacher les défauts. Bien entendu, dans d'autres cas, l'effet de la gravure est un enlèvement plus progressif. D'une manière générale, la gravure est configurée pour produire un enlèvement de la matière de la première couche d'électrode 121 au moins sur toute la surépaisseur des défauts 1210, 1211, au-delà de la surface moyenne de la couche 121. Plus préférentiellement, la gravure est configurée pour produire un enlèvement complet des défauts. C'est pourquoi le temps de gravure indiqué précédemment est relativement important rapporté à l'épaisseur de la couche 121.

Dans le cas préféré où l'enlèvement est configuré pour aller au-delà de la surface moyenne de la couche 121, cet enlèvement produit, à l'endroit des portions non masquées, une cavité s'étendant en creux dans l'épaisseur de la couche 121. Éventuellement, la cavité s'étend sur toute l'épaisseur de la couche 121. Généralement, plusieurs cavités seront présentes dans une couche. Une pluralité de couches, immédiatement successives ou non, peuvent comporter chacune une ou plusieurs cavités. Les cavités d'une couche peuvent avoir des formes et dimensions différentes, et notamment des profondeurs différentes.

Comme indiqué précédemment, la phase d'enlèvement considérée peut aussi servir à mettre en forme la première électrode 12, dans sa partie constituée par la première couche 121. Dans ce contexte, le repère 1212 de la figure 4 représente la gravure qui a été opérée simultanément à l'enlèvement des dépôts, pour délimiter latéralement le motif de la première électrode. On comprend que l'étape de l'invention permettant de supprimer les reliefs inopportuns de la couche 121 s'opère ainsi dans le contexte d'une autre étape, généralement nécessaire, et non pas dans le contexte d'une étape supplémentaire. On notera par ailleurs que la situation de la figure 4 correspond à celle après enlèvement de la couche de masquage 16, ultérieurement à l'enlèvement de matière de la première couche d'électrode 121.

L'étape en question peut être une mise en forme de la couche d'électrode, en particulier pour la limiter latéralement et/ou une étape participant à la connexion électrique ou à l'encapsulation.

La figure 5 montre ensuite la réalisation d'une deuxième couche d'électrode 122 au-dessus de la première couche 121 ainsi retraitée. De préférence, on utilise aussi la méthode du PVD pour la formation de cette couche. Les creux laissés par la phase d'enlèvement précédente pourront être atténués par ce dépôt.

Suivant une première possibilité, on construit ensuite les couches supérieures de l'empilement, à savoir l'électrolyte, la deuxième électrode et le deuxième collecteur.

Suivant une autre possibilité, on réitère les étapes des figures 3 à 5 de sorte à produire au moins une troisième couche de première électrode au-dessus de la deuxième 122. On remet donc en oeuvre les phases de formation d'une couche de masquage, d'enlèvement de matière (cette fois dans la deuxième couche d'électrode), la suppression de la couche de masquage et le dépôt du matériau de la troisième couche d'électrode. On notera que on peut poursuivre la mise en forme du motif, avec des caractéristiques équivalentes à celles de la zone exposée 161 et du motif gravé 1212 expliquées précédemment.

On peut multiplier le nombre de sous-couches formant la première électrode 12 et la figure 6 donne l'exemple de quatre sous-couches, respectivement 12a, 12b, 12c, 12d.

Suivant un premier mode de réalisation, l'épaisseur des couches est identique. Suivant une autre possibilité, l'épaisseur est décroissante, ou pour le moins la dernière couche (celle qui est destinée à être au contact avec l'électrolyte) est moins épaisse que les autres ou pour le moins est moins épaisse que la couche qui lui est immédiatement sous-jacente.

On pourra notamment mettre en oeuvre des couches qui présentent une épaisseur d'au moins 1 µm et/ou de moins de 10 µm.

Éventuellement, on peut utiliser des matériaux différents pour chacune des couches de la première électrode, ou pour au moins deux d'entre elles.

De manière conventionnelle, la fabrication du dispositif de l'invention, dans le cas d'un dispositif de stockage d'énergie par voie électrochimique, se poursuit par la formation de l'électrolyte 13 puis par celle de la deuxième électrode et du deuxième collecteur respectivement portant le repère 14 et le repère 15 à la figure 6. Éventuellement, la deuxième électrode 14 peut être fabriquée en utilisant le procédé précédemment décrit pour la première. Le support de dépôt de la ou des couches de formation de la deuxième électrode 14 pourra être l'électrolyte 13.

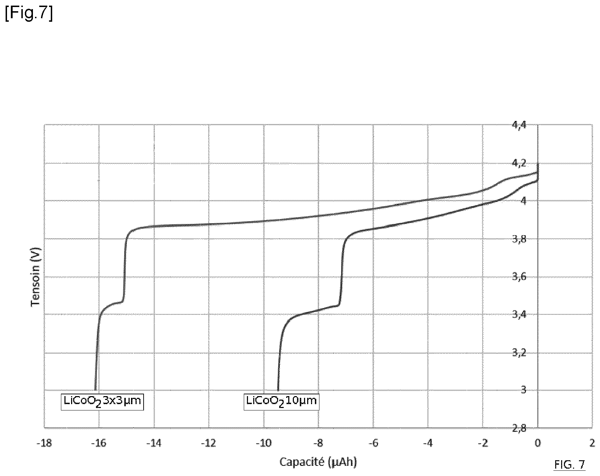

La figure 7 donne une illustration du progrès technique notable permis par la présente invention. Elle représente deux courbes capacité électrique/tension pour deux micro-batteries par ailleurs équivalentes mais qui se différencient par la constitution de leur première électrode. Dans un premier cas, il s'agit d'une première électrode réalisée par l'invention en trois couches chacune de 3 µm de LiCoO₂. Dans l'autre cas, la première électrode est du même matériau mais formée d'un seul tenant, suivant un procédé conventionnel, et une épaisseur de 10 µm. Malgré une épaisseur légèrement supérieure dans ce second cas, le comportement de la micro-batterie est de bien moindre qualité, au vu de l'écart de capacité observé.

L'invention n'est pas limitée aux modes de réalisations précédemment décrits et s'étend à tous les modes de réalisation couverts par les revendications.

## Revendications

1. Procédé de réalisation d'une électrode (12), pour un dispositif de stockage d'énergie par voie électrochimique sous forme de micro-batterie, dans lequel l'électrode (12) est obtenue par formation de plusieurs couches empilées (121, 122),
**caractérisé en ce qu'**il comprend :
- i) une réalisation d'une première couche d'électrode (121) par dépôt physique en phase vapeur sur un support, ledit dépôt produisant des défauts formant, dans la première couche d'électrode (121), des reliefs (1210, 1211) en saillie ;
- ii) une formation d'une couche de masquage (16) sur la première couche d'électrode (121), configurée pour être suffisamment fine de sorte à ne pas recouvrir totalement les reliefs (1210, 1211 ), de sorte à recouvrir une première portion de la surface exposée de la première couche d'électrode (121) sans recouvrir une deuxième portion, non masquée, de la surface exposée de la première couche d'électrode (121), la deuxième portion comportant des reliefs (1210, 1211) ayant une extension, suivant une dimension en épaisseur de l'électrode (12), supérieure à une extension maximale, suivant la dimension en épaisseur de l'électrode (12), de la première portion ;
- iii) un enlèvement de matière de la première couche d'électrode (121) par application d'une solution de gravure sur la première couche d'électrode (121) à partir de la deuxième portion ;
- iv) une suppression de la couche de masquage (16) ;
- v) une réalisation d'une deuxième couche d'électrode (122) immédiatement au-dessus de la surface exposée de la première couche d'électrode (121).

2. Procédé selon la revendication précédente dans lequel la deuxième couche d'électrode (122) est réalisée par dépôt physique en phase vapeur.

3. Procédé selon l'une des revendications précédentes, dans lequel on utilise du LiCoO₂ pour réaliser au moins l'une parmi la première couche d'électrode (121) et la deuxième couche d'électrode (122).

4. Procédé selon l'une des revendications précédentes, comprenant une réalisation d'au moins une troisième couche d'électrode au-dessus de la deuxième couche d'électrode (122) en réitérant les étapes ii) à v).

5. Procédé selon l'une des revendications précédentes, dans lequel l'épaisseur d'une dernière couche d'électrode de l'électrode (12), la plus éloignée de la première couche d'électrode (121), est inférieure à celles des autres couches d'électrode.

6. Procédé selon l'une des revendications précédentes, dans lequel la formation d'une couche de masquage (16) comprend la formation d'au moins un motif (1212) traversant toute l'épaisseur de la couche de masquage (16) de sorte à exposer une troisième portion de la première couche d'électrode (121), l'enlèvement étant configuré pour produire un enlèvement de matière additionnelle à partir de la troisième portion (1212).

7. Procédé de fabrication d'un dispositif de stockage d'énergie par voie électrochimique, comprenant la réalisation d'au moins une première électrode (12) en mettant en oeuvre le procédé selon l'une des revendications précédentes.

8. Procédé selon la revendication précédente, comprenant une formation d'un premier collecteur (11) sur un support (10) puis la réalisation de la première électrode (12) sur le premier collecteur (11).

9. Procédé selon l'une des revendications précédentes, dans lequel la formation d'une couche de masquage (16) comprend une étape de dépôt de résine par enduction centrifuge.

10. Electrode pour un dispositif de stockage d'énergie par voie électrochimique sous forme de micro-batterie, comprenant une pluralité de couches empilées (121, 122), **caractérisée en ce qu'**une première couche d'électrode (121) de la pluralité de couches empilées (121,122) comprend au moins une cavité formée en creux dans son épaisseur et **en ce qu'**une deuxième couche d'électrode (122) de la pluralité de couches empilées, située immédiatement au-dessus de la première couche d'électrode, recouvre au moins en partie la surface exposée de la première couche d'électrode (121) et remplit l'au moins une cavité.

11. Électrode selon la revendication précédente, dans laquelle l'au moins une cavité comprend une cavité s'étendant suivant l'intégralité de l'épaisseur de la première couche (121).

12. Électrode selon l'une quelconque des deux revendications précédentes, dans laquelle les couches d'électrode de la pluralité de couches empilées (121,122) ont une épaisseur supérieure ou égale à 1 µm et/ou inférieure ou égale à 10 µm.

13. Électrode selon l'une quelconque des trois revendications précédentes, dans laquelle au moins deux couches immédiatement successives parmi la pluralité de couches empilées (121,122) présentent une même épaisseur.

14. Dispositif de stockage d'énergie par voie électrochimique sous forme de micro-batterie, comprenant en empilement sur un support (10), un premier collecteur (11), une première électrode (12), un électrolyte (13), une deuxième électrode (14) et un deuxième collecteur (15), au moins l'une parmi la première électrode (12) et la deuxième électrode (14) étant selon l'une des revendications 10 à 13.

## Patentansprüche

1. Verfahren zum elektrochemischen Herstellen einer Elektrode (12) für eine Energiespeichervorrichtung in Form einer Mikrobatterie, wobei die Elektrode (12) durch Bildung mehrerer gestapelter Schichten (121, 122) erhalten wird,
**dadurch gekennzeichnet, dass** es Folgendes umfasst:
- i) Herstellen einer ersten Elektrodenschicht (121) auf einem Träger durch physikalische Dampfabscheidung, wobei die Abscheidung Defekte erzeugt, die erhabene Vorsprünge (1210, 1211) in der ersten Elektrodenschicht (121) bilden;
- ii) Bilden einer Maskierungsschicht (16) auf der ersten Elektrodenschicht (121), die konfiguriert ist, um ausreichend dünn zu sein, um die Vorsprünge (1210, 1211) nicht vollständig zu bedecken, um einen ersten Abschnitt der freigelegten Oberfläche der ersten Elektrodenschicht (121) zu bedecken, ohne einen nicht maskierten zweiten Abschnitt der freigelegten Oberfläche der ersten Elektrodenschicht (121) zu bedecken, wobei der zweite Abschnitt, der die Vorsprünge (1210, 1211) umfasst, eine Erweiterung entlang einer Dickenabmessung der Elektrode (12) aufweist, die größer ist als eine maximale Erweiterung entlang der Dickenabmessung der Elektrode (12) des ersten Abschnitts;
- iii) Abtragen von Material von der ersten Elektrodenschicht (121) durch Aufbringen einer Ätzlösung auf der ersten Elektrodenschicht (121) ab dem zweiten Abschnitt;
- iv) Entfernen der Maskierungsschicht (16);
- v) Herstellen einer zweiten Elektrodenschicht (122) direkt unter der freigelegten Oberfläche der ersten Elektrodenschicht (121).

2. Verfahren nach dem vorhergehenden Anspruch, wobei die zweite Elektrodenschicht (122) durch physikalische Dampfabscheidung hergestellt wird.

3. Verfahren nach einem der vorhergehenden Ansprüche, wobei LiCoO₂ verwendet wird, um mindestens eine von der ersten Elektrodenschicht (121) und der zweiten Elektrodenschicht (122) herzustellen.

4. Verfahren nach einem der vorhergehenden Ansprüche, das das Herstellen mindestens einer dritten Elektrodenschicht unter der zweiten Elektrodenschicht (122) durch Wiederholen der Schritte ii) bis v) umfasst.

5. Verfahren nach einem der vorhergehenden Ansprüche, wobei die Dicke einer letzten Elektrodenschicht der Elektrode (12), die am weitesten von der ersten Elektrodenschicht (121) entfernt liegt, kleiner ist als die der anderen Elektrodenschichten.

6. Verfahren nach einem der vorhergehenden Ansprüche, wobei das Bilden einer Maskierungsschicht (16) das Bilden mindestens eines Musters (1212) umfasst, das die gesamte Dicke der Maskierungsschicht (16) durchzieht, um einen dritten Abschnitt der ersten Elektrodenschicht (121) freizulegen, wobei das Abtragen konfiguriert ist, um ein zusätzliches Abtragen von Material ab dem dritten Abschnitt (1212) zu erzeugen.

7. Verfahren zum elektrochemischen Fertigen einer Energiespeichervorrichtung, das das Herstellen mindestens einer ersten Elektrode (12) durch Durchführen des Verfahrens nach einem der vorhergehenden Ansprüche umfasst.

8. Verfahren nach dem vorhergehenden Anspruch, das das Bilden eines ersten Kollektors (11) auf einem Träger (10) und dann das Herstellen der ersten Elektrode (12) auf dem ersten Kollektor (11) umfasst.

9. Verfahren nach einem der vorhergehenden Ansprüche, wobei das Bilden einer Maskierungsschicht (16) einen Schritt der Abscheidung von Harz durch Schleuderbeschichtung umfasst.

10. Elektrochemische Elektrode für eine Energiespeichervorrichtung in Form einer Mikrobatterie, die mehrere gestapelte Schichten (121, 122) umfasst, **dadurch gekennzeichnet, dass** eine erste Elektrodenschicht (121) der mehreren gestapelten Schichten (121, 122) mindestens einen in ihrer Dicke hohl ausgebildeten Hohlraum umfasst, und dadurch, dass eine zweite Elektrodenschicht (122) der mehreren gestapelten Schichten, die sich direkt unter der ersten Elektrodenschicht befindet, mindestens einen Teil der freigelegten Oberfläche der ersten Elektrodenschicht (121) bedeckt und den mindestens einen Hohlraum füllt.

11. Elektrode nach dem vorhergehenden Anspruch, wobei der mindestens eine Hohlraum einen Hohlraum umfasst, der sich entlang der gesamten Dicke der ersten Schicht (121) erstreckt.

12. Elektrode nach einem der beiden vorhergehenden Ansprüche, wobei die Elektrodenschichten der mehreren gestapelten Schichten (121, 122) eine Dicke größer gleich 1 µm und/oder kleiner gleich 10 µm haben.

13. Elektrode nach einem der drei vorhergehenden Ansprüche, wobei mindestens zwei direkt aufeinanderfolgende Schichten unter den mehreren gestapelten Schichten (121, 122) die gleiche Dicke aufweisen.

14. Elektrochemische Energiespeichervorrichtung in Form einer Mikrobatterie, die auf einem Träger (10) gestapelt einen ersten Kollektor (11), eine erste Elektrode (12), einen Elektrolyten (13), eine zweite Elektrode (14) und einen zweiten Kollektor (15) umfasst, wobei mindestens eine von der ersten Elektrode (12) und der zweiten Elektrode (14) nach einem der Ansprüche 10 bis 13 ist.

## Claims

1. Method for producing an electrode (12) for an electrochemical energy storage device in the form of a micro-battery, wherein the electrode (12) is obtained by forming a plurality of stacked layers (121, 122),
**characterised in that** it comprises:
- i) producing a first electrode layer (121) by physical vapour deposition on a support, said deposition producing defects forming projecting reliefs (1210, 1211) in the first electrode layer (121);
- ii) forming a masking layer (16) on the first electrode layer (121), configured to be sufficiently thin so as not to completely cover the reliefs (1210, 1211), so as to cover a first portion of the exposed surface of the first electrode layer (121) without covering a second, unmasked portion of the exposed surface of the first electrode layer (121), the second portion comprising reliefs (1210, 1211) having an extension, along a thickness dimension of the electrode (12), that is greater than a maximum extension, along the thickness dimension of the electrode (12), of the first portion;
- iii) removing material from the first electrode layer (121) by applying an etching solution to the first electrode layer (121) from the second portion;
- iv) eliminating the masking layer (16);
- v) producing a second electrode layer (122) immediately on top of the exposed surface of the first electrode layer (121).

2. Method according to the preceding claim, wherein the second electrode layer (122) is produced by physical vapour deposition.

3. Method according to one of the preceding claims, wherein LiCoO₂ is used to produce at least one of the first electrode layer (121) and the second electrode layer (122).

4. Method according to one of the preceding claims, comprising producing at least a third electrode layer on top of the second electrode layer (122) by repeating steps ii) to v).

5. Method according to one of the preceding claims, wherein the thickness of a last electrode layer of the electrode (12), which is farthest from the first electrode layer (121), is smaller than those of the other electrode layers.

6. Method according to one of the preceding claims, wherein forming a masking layer (16) comprises forming at least one pattern (1212) through the entire thickness of the masking layer (16) so as to expose a third portion of the first electrode layer (121), the removal being configured to produce a removal of additional material from the third portion (1212).

7. Method for manufacturing an electrochemical energy storage device, comprising producing at least a first electrode (12) by implementing the method according to one of the preceding claims.

8. Method according to the preceding claim, comprising forming a first collector (11) on a support (10) and then producing the first electrode (12) on the first collector (11).

9. Method according to one of the preceding claims, wherein forming a masking layer (16) comprises a step of depositing resin by spin coating.

10. Electrode for an electrochemical energy storage device in the form of a micro-battery, comprising a plurality of stacked layers (121, 122), **characterised in that** a first electrode layer (121) of the plurality of stacked layers (121, 122) comprises at least one cavity hollowed out from the thickness thereof, and **in that** a second electrode layer (122) of the plurality of stacked layers, located immediately on top of the first electrode layer, at least partially covers the exposed surface of the first electrode layer (121) and fills the at least one cavity.

11. Electrode according to the preceding claim, wherein the at least one cavity comprises a cavity extending through the entire thickness of the first layer (121).

12. Electrode according to any one of the preceding two claims, wherein the electrode layers of the plurality of stacked layers (121, 122) have a thickness greater than or equal to 1 µm and/or less than or equal to 10 µm.

13. Electrode according to any one of the preceding three claims, wherein at least two immediately successive layers of the plurality of stacked layers (121, 122) have the same thickness.

14. Electrochemical energy storage device in the form of a micro-battery, comprising, stacked on a support (10), a first collector (11), a first electrode (12), an electrolyte (13), a second electrode (14) and a second collector (15), at least one of the first electrode (12) and the second electrode (14) being according to one of claims 10 to 13.
